# DEMANDE DE BREVET EUROPEEN

(11) **EP 1 764 350 A1**
(43) Date de publication de la demande: **21.03.2007**
(21) Numéro de dépôt: 06119597.0
(22) Date de dépôt: 25.08.2006
(51) Int. Cl.: C03B 37/018, C03B 37/014, C03B 37/016, C03C 13/04, C03B 37/027, H01S 3/067, G02B 6/02

(54) **Procédé de fabrication d'une fibre optique comprenant des nanoparticules et préforme mise en ?uvre dans la fabrication d'une telle fibre.**

(30) Priorité: 16.09.2005 FR 0552788
(71) Demandeur: ALCATEL, 75008 Paris (FR)
(72) Inventeur: Gasca, Laurent, 91140, Villebon-sur-Yvette (FR); Blanchandin, Stéphanie, 75015, Paris (FR); Pastouret, Alain, 91940, Les Ulis (FR); Simonneau, Christian, 92160, Antony (FR)
(74) Mandataire: Sciaux, Edmond

(57) **Abrégé**

La présente invention concerne un procède de fabrication d'une fibre optique (18) comprenant les étapes suivantes
- on réalise une préforme (10) contenant des nanoparticules munies d'un élément actif comprenant au moins un évidemment (14) au voisinage d'une partie au moins des nanoparticules,
- on effectue le fibrage de la préforme (10) en introduisant un gaz (11) non-oxydant dans l'évidemment (14), limitant ainsi les risques d'oxydations des nonoporticules de la préforme (10).

La préforme (10) destinée à là fabrication d'une fibre optique (18) par le procédé selon l'invention comprend des nanoparticules munies d'un élément actif dans une zone dopée (12) et au moins un évidement (14) au voisinage de la zone dopée (12).

## Description

### Domaine de l'Invention:

La présente invention concerne une préforme destinée à la fabrication d'une fibre optique ainsi qu'un procédé, de fabrication d'une fibre optique mettant en oeuvre une telle préforme.

### Art Antérieur :

Dans le domaine des télécommunications, il est connu d'utiliser des guides planaires ou des fibres optiques pour transmettre des signaux optiques en effectuant un traitement simultané de ces signaux.

Par exemple, une fibre optique peut amplifier le signal optique transmis. A cet effet, une telle fibre amplificatrice comprend un coeur, formé d'un matériau transparent et d'un élément actif, ou dopant, en général à base de terres rares telles que l'ion Er, destiné à amplifier l'intensité du signal optique transmis, et d'une gaine qui entoure le coeur pour maintenir majoritairement le signal transmis dans le coeur de la fibre.

L'utilisation d'une telle fibre optique peut être améliorée en mettant en oeuvre des nanoparticules dans le coeur de la fibre, ces nanoparticules comprenant l'élément actif ainsi que d'éventuels autres composés améliorant le fonctionnement de cet élément actif. La synthèse et l'utilisation de telles nanoparticules sont décrites; par exemple, dans la demande de brevet US-2003/175 003.

### Résumé de l'invention

La présente invention comprend la constatation selon laquelle des nanoparticules, qui peuvent être mises en oeuvre dans des guides planaires, ne peuvent pas être mises en oeuvre dans les fibres optiques compte tenu de la nature même du procédé de fabrication d'une fibre.

De fait, la fabrication d'une fibre optique comporte d'abord la fabrication d'une préforme qui est étirée par fibrage pour obtenir une fibre. La préforme qui est mis en oeuvre dans l'opération de fibrage se présente habituellement sous la forme d'un barreau cylindrique en matériau massif à base de silice SiO₂. Pour fabriquer les préformes on utilise courammment une méthode de dépôt chimique en phase vapeur (MCVD : Modified Chemical Vapor Deposition) à l'intérieur d'un tube de silice en rotation de particules d'oxydes qui se transforment en silice vitreuse. Le barreau ainsi obtenu est rétreint thermiquement afin d'obtenir une préforme pleine. Un mode de réalisation particulier basé sur cette technique est décrit par exemple dans le document US-2004/187 524. Une autre méthode connue (dite OVD : Outside Vapor Deposition) consiste à effectuer le dépôt des particules à base de silice à l'extérieur d'une pièce, telle qu'un madrin, de manière à obtenir une superposition de couches de verre poreux. Le madrin est ensuite retiré et le barreau est rétreint thermiquement pour obtenir une préforme pleine qui sera mise en oeuvre dans l'opération de fibrage. Un mode de réalisation particulier basé sur cette technique est décrit par exemple dans le document WO-00/20346.

Le fibrage nécessite le traitement thermique de la préforme qui dans le cas présent peut contenir des nanoparticules. Or, le traitement thermique se réalise avec des températures supérieures à 500°C, et généralement supérieures à 1000°C, ces hautes températures entraînant une altération de la composition et/ou de la structure de ces nanoparticules, et donc de leur propriété.

La présente invention comprend aussi la constatation selon laquelle l'altération des nanoparticules aux hautes températures est principalement due à l'oxydation d'au moins un de ses constituants, par exemple du silicium ou du germanium, qui présente une forme stable sous la forme d'oxydes.

C'est pourquoi, la présente invention concerne un procédé de fabrication d'une fibre optique comprenant les étapes suivantes
- on réalise une préforme contenant des nanoparticules munies d'un élément actif comprenant au moins un évidement au voisinage d'une partie au moins des nanoparticules,
- on effectue le fibrage de la préforme en introduisant un gaz non-oxydant dans l'évidement, limitant ainsi les risques d'oxydations des nanoparticules de la préforme.

Selon une réalisation, le gaz non-oxydant est un gaz réducteur et/ou un gaz neutre.

Selon une réalisation particulière, le gaz non-oxydant est un mélange de gaz non explosif à haute température comprenant de l'hydrogène et un gaz neutre tel que de l'hélium.

Dans une réalisation, on introduit des nanoparticules dans la préforme au cours de sa fabrication à l'aide d'un procédé de dépôt chimique en phase vapeur modifiée, d'une imprégnation par diffusion ou d'un procédé sol/gel.

Dans une réalisation, on introduit le gaz non-oxydant dans l'évidement de la préforme lors d'au moins une des étapes de la fabrication de cette préforme de telle sorte que ce gaz est présent dans la préforme lorsqu'on effectue son traitement thermique.

L'invention concerne également une préforme, destinée à être mise en oeuvre lors de l'opération de fibrage au cours de la fabrication d'une fibre optique, la préforme comprenant des nanoparticules munies d'un élément actif dans une zone dopée. La préforme mise en oeuvre dans le procédé selon la présente invention comprend au moins un évidement au voisinage d'une partie au moins des nanoparticles.

Ainsi, un procédé utilisant une préforme conforme à l'invention permet de préserver les nanoparticules déposées dans cette préforme en les maintenant, lors du fibrage de la préforme, dans un environnement non-oxydant généré par un gaz présent à leur voisinage, ce qui limite très fortement leur oxydation et supprime, ou au moins réduit, l'altération des nanoparticules dans le coeur de la fibre.

Par ailleurs, une variété plus importante de nanoparticules peut être mise en oeuvre dans la fabrication de fibres optiques compte tenu du fait que l'environnement auquel sont soumises ces nanoparticules pendant le fibrage du préforme est moins hostile. Ainsi, il est possible de développer l'utilisation de nouvelles fibres.

Dans une réalisation, la préforme comprend un axe longitudinal et l'évidement est coaxial à cet axe de la préforme, ce qui facilite l'écoulement du gaz réducteur, lors du fibrage, sur toute la longueur de la préforme.

Selon une réalisation, la préforme comprend une pluralité d'évidements coaxiaux à l'axe de la préforme, ce qui permet par exemple d'amener un gaz non-oxydant au voisinage d'une pluralité de zones dopées dans la préforme.

Dans une réalisation, la préforme comprend une pluralité d'évidements formant des cercles et/ou des arcs de cercles concentriques vis-à-vis de l'axe de la préforme, cette réalisation permettant une fabrication simple de la préforme.

Dans une réalisation, au moins deux évidements formant des cercles et/ou des arcs de cercles sont séparés par une zone dépourvue de nanoparticules.

L'invention concerne aussi une fibre optique contenant des nanoparticules comprenant un élément actif obtenue par un procédé conforme à l'une des réalisations précédentes.

### Description des figures:

D'autres caractéristiques et avantages de l'invention apparaîtront avec la description effectuée ci-dessous, à titre illustratif et non limitatif, d'une réalisation de l'invention faisant référence aux figures ci-jointes sur lesquelles :
- la figure 1 est un schéma de principe d'un procédé de fibrage mettant en oeuvre l'invention,
- les figures 2a, 2b, 2c et 2d sont des vues en coupe de préformes conformes à l'invention, et
- les figures 3a et 3b sont des vues en coupe de fibres obtenues à l'aide d'un procédé de fibrage conforme à l'invention.

### Description détaillée de l'invention :

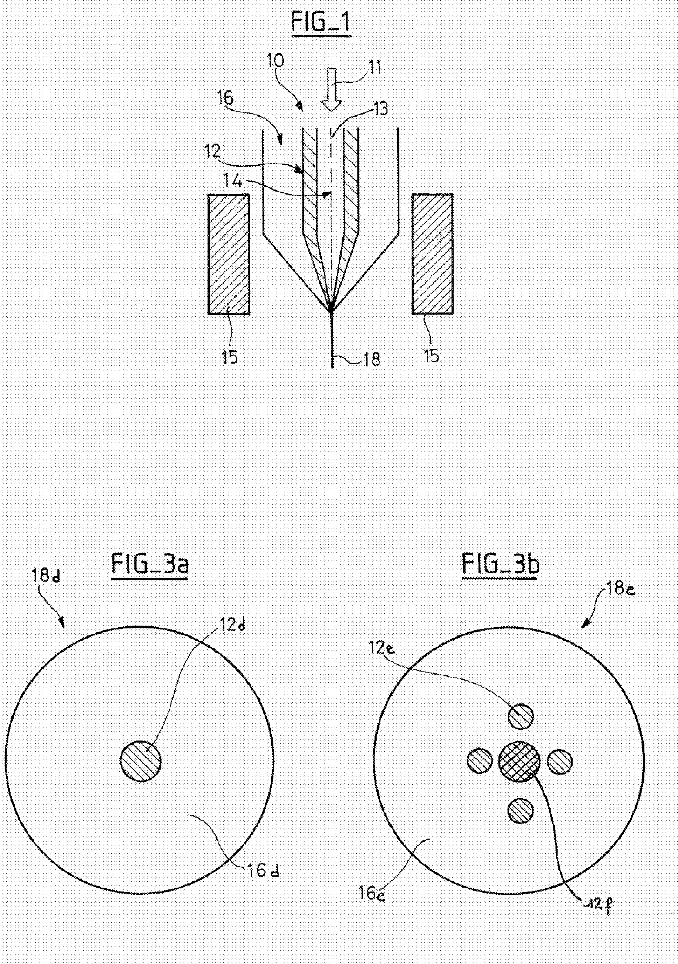

Sur la figure 1 est représentée l'obtention d'une fibre optique **18** par un procédé de fibrage d'une préforme **10** conforme à l'invention, c'est-à-dire qu'un gaz **11** non-oxydant, par exemple réducteur, est maintenu au voisinage de la zone dopée **12** de la préforme **10** par son écoulement dans un évidemment **14** coaxial à l'axe **13** de la préforme **10.**

Ainsi, les, nanoparticules comprises dans la zone dopée **12** du matériau **16** de la préforme **10** sont protégées d'une oxydation par la présence de ce gaz **11** non-oxydant lors du fibrage de la préforme **10** effectué à l'aide de dispositifs 15 échauffant cette préforme.

L'altération de la composition et/ou de la structure des nanoparticules présentes dans la zone dopées **12** est ainsi fortement limitée. En d'autres termes, les conditions dans lesquelles sont placées les nanoparticules sont moins agressives de telle sorte, qu'on peut utiliser des nanoparticules de composition diverses dans la préforme **10** et, par conséquent, dans la fibre **18** obtenue à partir de cette préforme **10**.

Dans une réalisation, le gaz **11** non-oxydant est un mélange de gaz non explosif à haute température comprenant de l'hydrogène et un gaz neutre tel que de l'hélium. Par exemple, le gaz commercialisé par la société l'Air Liquide sous la dénomination NOXAL peut être utilisé.

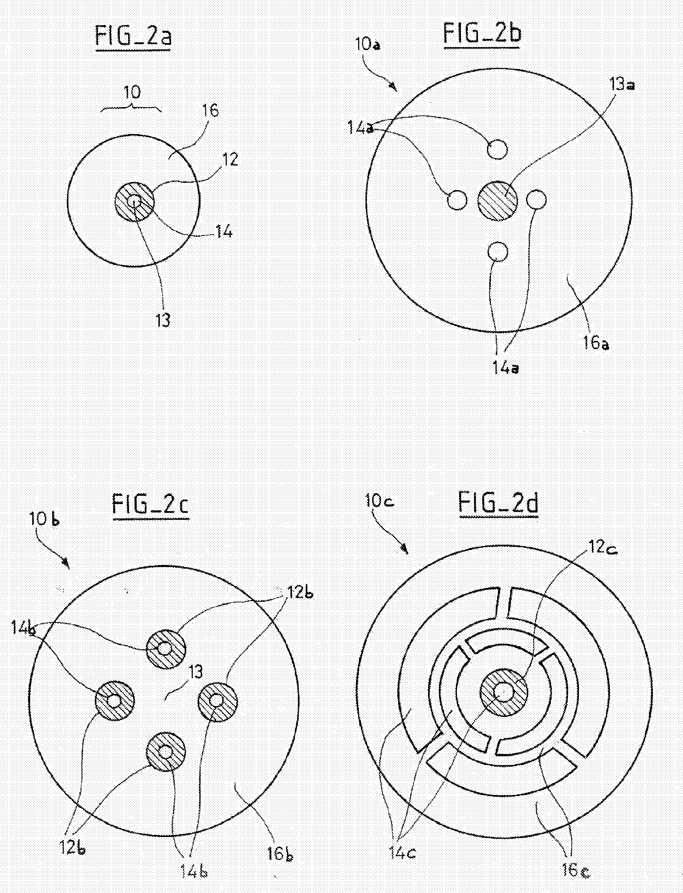

La préforme **10** mise en oeuvre dans le procédé décrit à l'aide de la figure **1** est représentée en coupe sur la figure **2a** qui montre avec une nouvelle perspective la présence de l'évidemment **14** au voisinage de la zone dopée **12** de la préforme **10.**

Une telle préforme conforme à l'invention peut être réalisée de manière classique par l'utilisation d'une ou plusieurs techniques connues telles que le dépôt chimique en phase vapeur modifiée, ou MCVD pour Modified Chemical Vapor Deposition en anglais, l'imprégnation par diffusion ou la technique sol/gel,

La fibre optique **18d,** illustrée en coupe sur la figure 3a, comportant une structure verrière **16a** comprenant une zone dopée **12d**, est obtenue par fibrage de la préforme **10** de la figure 2a.

D'autres techniques peuvent être mises en oeuvre. Ainsi, les préformes **10a, 10b** et **10c** illustrées sur les figues 2b, 2c et 2d peuvent être obtenues par un procédé d'assemblage verrier, par un procédé sol/gel ou par une extrusion.

Par ailleurs, il convient de signaler que les zones dopées peuvent être générées au début et/ou à la fin de la fabrication de la préforme. Par exemple, les zones dopées **12b** de la préforme **10b** de la figure 2c peuvent être obtenues soit préalablement à la fabrication de la préforme **10b** à partir d'éléments tubulaires dopées et intégrés dans une structure verrière **16b**, soit postérieurement à la fabrication de la structure verrière **16b** de la préforme **10b** en ajoutant une ou plusieurs zones dopées **12b**, par exemple à l'aide d'un procédé MCVD, à l'aide d'une opération de trempage ou encore à l'aide d'un procédé couche sol-gel,

Lorsqu'un procédé MCVD est mis en oeuvre pour fabriquer une préforme **10** conforme à l'invention, il est nécessaire de maintenir un évidement permettant le passage du gaz **11** non-oxydant au voisinage de la zone dopée **12** de la préforme **10.**

La variante montrée sur la figure 2b montre quatre évidements **14a** entourant une même zone dopée **12a** d'une préforme **10a,** tandis que la figure 2c montre quatre évidements **14b** bordant quatre zones dopées **12b** respectives d'une autre préforme **10b.** Il convient de signaler que la symétrie apparente des zones dopées sur ces figures n'est pas requise d'une façon générale pour la mise en oeuvre de l'invention.

Dans une variante, une pluralité, d'évidements **14c**, coaxiaux à l'axe **13c** de la préforme **10c,** est mise en oeuvre, ces évidements **14c** étant disposés symétriquement par rapport à cet axe **13c** de la préforme **10c.**
Cette variante est illustrée par la figure 2d qui montre une préforme **10c** conforme à l'invention comprenant six évidements **14c** formant des arcs de cercles concentriques et symétriques vis-à-vis de l'axe **13c** de la préforme **10c,** ces évidements **14c** étant séparés par une couche de matériau **16** dépourvu de nanoparticules. Dans cet exemple de préforme, la symétrie cylindrique des zones dopées **12c** par rapport à l'axe de la préforme **10c** permet d'obtenir une fibre présentant de meilleures caractéristiques.

On a illustrée en coupe sur la figure 3b une fibre optique **18e** qui comporte une structure verrière **16e** comprenant des zones **12e** dopées, par des nanoparticules et une zone centrale **12f** dopée de manière classique pour permettre, le guidage (germanium, phosphore,...). Elle peut être obtenue par exemple par fibrage de la préforme **10b** de la figure 2c.

Par le procédé selon la présente invention, on peut également fabriquer des fibres optiques à cristal photonique (dite PCF : Photonic Crystal Fibers) comportant des trous obtenues par fibrage de préformes obtenues par un procédé d'assemblage verrier. Pour fabriquer de telles fibres PCF, il convient notamment d'opérer le fibrage avec une pression de gaz non-oxydant qui soit du même ordre de grandeur que la pression atmosphérique, voire un peu supérieure. Lorsque le fibrage est réalisé avec une pression de gaz non-oxydant dans les évidemment qui est inférieure à la pression atmosphérique, on obtient les fibres décrites précédemment.

Il convient de préciser que le matériau dépourvu de nanoparticules peut être un verre formé de silice ou un autre de type de verre, et que la zone dopée comprend des nanoparticules munies d'un élément actif et/ou d'un composant tel que l'erbium (Er), l'ytterbium (Yb), le thulium (Tm), l'europium (Eu), le cérium (Ce), le chrome (Cr), le manganèse (Mn), le bismuth (Bi), l'antimoine (Sb), le tellure (Te), le tantale (Ta), le zirconium (Zr), le niobium (Nb), le vanadium (V), le plomb (Pb), le tungstène (W), l'indium (In), le gallium (Ga), l'étain (Sn), le molybdène (Mo), le bore (B), l'arsenic (As), le titane (Ti), l'aluminium (Al). En particulier, l'utilisation de nanoparticules de Si est avantageuse pour les fibres amplificatrices dopées à l'erbium. La section effective d'absorption de telles nanoparticules est en effet de trois ordres de grandeur supérieure à celle de l'erbium, ce qui permet de transférer plus efficacement l'énergie optique vers les ions erbium.

Grâce à la grande diversité de nanoparticules pouvant être mises en oeuvre dans une préforme conforme à l'invention, l'utilisation des fibres obtenues peut être très diverse. A titre d'exemple, on peut citer les applications suivantes: fibre dopée terre rare pour amplificateur ou laser optique, fibre à gain Roman exacerbé pour amplificateur ou laser optique, fibre fortement non linéaire, fibre à absorbant saturable et/ou fibre polarisable.

La présente invention peut être mise en oeuvre selon de nombreuses variantes. Par exemple, on peut introduire le gaz non-oxydant dans la préforme lors de différentes phases de fabrication de cette préforme.

## Revendications

1. Procédé de fabrication d'une fibre optique (18) **caractérisé en ce qu'**il comprend les étapes suivantes
- on réalise une préforme (10) contenant des nanoparticules munies d'un élément actif comprenant au moins un évidemment (14) au voisinage d'une partie au moins des nanoparticules,
- on effectue le fibrage de la préforme (10) en introduisant un gaz (11) non-oxydant dans l'évidemment (14), limitant ainsi les risques d'oxydations des nanoparticules de la préforme (10).

2. Procédé selon la revendication 1, dans lequel on introduit un gaz non-oxydant dans au moins un évidemment de la préforme lors d'au moins une des étapes de la fabrication de cette préforme.

3. Procédé selon l'une des revendications 1 et 2, dans lequel le gaz non-oxydant est un gaz réducteur et/ou un gaz neutre.

4. Procédé selon l'une des revendications 1 à 3, dans lequel le gaz non-oxydant est un mélange de gaz non explosif à haute température comprenant de l'hydrogène et un gaz neutre.

5. Procédé selon l'une des revendications précédentes, dans lequel on introduit des nanoparticules dans la préforme au cours de sa fabrication à l'aide d'un procédé de dépôt chimique en phase vapeur modifiée, d'une imprégnation par diffusion ou d'un procédé sol/gel.

6. Procédé selon l'une des revendications précédentes, dans lequel on introduit le gaz non-oxydant dans l'évidement de la préforme lors d'au moins une des étapes de la fabrication de cette préforme de telle sorte que ce gaz est présent dans la préforme lorsqu'on effectue son traitement thermique.

7. Fibre optique (18) comprenant des nanoparticules munies d'un élément actif obtenue par un procédé conforme à l'une des revendications précédentes.

8. Préforme (10) pour la mise en oeuvre du procédé selon l'une des revendications 1 à 6, comprenant des nanoparticules munies d'un élément actif dans une zone dopée (12), **caractérisée en ce qu'**elle comprend au moins un évidemment (14) au voisinage d'au moins une partie des nanoparticules.

9. Préforme selon la revendication 8, dans laquelle l'évidemment (14) est coaxial à l'axe longitudinal (13) de la préforme (10).

10. Préforme selon la revendication 9, comprenant une pluralité d'évidements (14) coaxiaux à l'axe longitudinal (13) de la préforme (10).

11. Préforme selon la revendication 10, comprenant une pluralité d'évidements (14) formant des cercles et/ou des arcs de cercles concentriques vis-à-vis de l'axe longitudinal (13) de la préforme (10).

12. Préforme selon la revendication 11, dans laquelle ou mains deux évidements (14) formant des cercles et/ou des arcs de cercles sont séparés par une zone (16) dépourvue de nanoparticules.
